(19)

Europäisches Patentamt

European Patent Office

Office européen des brevets

(11) **EP 4 664 569 A1**

(12) **EUROPEAN PATENT APPLICATION**
published in accordance with Art. 153(4) EPC

(43) Date of publication:
**17.12.2025  Bulletin 2025/51**

(21) Application number: 23920651.9

(22) Date of filing: **17.05.2023**

(51) International Patent Classification (IPC):
*H01M 8/04298* (2016.01)    *G06Q 10/06* (2023.01)

(86) International application number:
**PCT/CN2023/094876**

(87) International publication number:
**WO 2024/164453 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **06.02.2023  CN 202310068677**

(71) Applicants:
• **Suzhou Nuclear Power Research Institute Co., Ltd**
  **Suzhou, Jiangsu 215008 (CN)**
• **China General Nuclear Power Corporation**
  **Shenzhen, Guangdong 518026 (CN)**
• **CGN Power Co., Ltd.**
  **Shenzhen, Guangdong 518026 (CN)**

(72) Inventors:
• **YANG, Jianfeng**
  **Suzhou, Jiangsu 215008 (CN)**
• **FENG, Bingchen**
  **Suzhou, Jiangsu 215008 (CN)**
• **WANG, Handing**
  **Suzhou, Jiangsu 215008 (CN)**
• **HUANG, Lihua**
  **Suzhou, Jiangsu 215008 (CN)**
• **YANG, Zhichao**
  **Suzhou, Jiangsu 215008 (CN)**
• **GUO, Jianbing**
  **Suzhou, Jiangsu 215008 (CN)**
• **LI, Qiongzhe**
  **Suzhou, Jiangsu 215008 (CN)**

(74) Representative: **Westphal, Mussgnug & Partner, Patentanwälte mbB**
  **Werinherstraße 79**
  **81541 München (DE)**

(54) **METHOD FOR CONSTRUCTING RISK MONITORING AND EARLY WARNING TOOL OF FUEL CELL VEHICLE-MOUNTED HYDROGEN SYSTEM**

(57)    The present invention relates to a method for constructing a risk monitoring and early warning tool of a fuel cell vehicle-mounted hydrogen system, The method comprises the following steps: constructing a device database of a fuel cell vehicle-mounted hydrogen system and a hydrogen leakage database; processing the device database by using a minimum cutset algorithm, so as to obtain a first risk evaluation result, and performing physical analysis on the hydrogen leakage database to obtain a second risk evaluation result; and comprehensively processing the first risk evaluation result and the second risk evaluation result and performing display. The present invention can implement monitoring and early warning on a risk of a vehicle-mounted hydrogen system, provides guidance for safety management of a hydrogen fuel cell vehicle, and can promote the development and widespread application of hydrogen fuel cell technology.

FIG. 1

EP 4 664 569 A1

**Description**

FIELD

The invention relates to the field of hydrogen energy safety analysis, in particular to a method for constructing a risk monitoring and early warning tool of a fuel cell vehicle-mounted hydrogen system.

BACKGROUND

The utilization of hydrogen energy has been highly valued by governments, automobile companies, energy companies and environmental organizations. As one of the important applications of hydrogen energy, hydrogen fuel cell vehicles use proton exchange membrane fuel cells to convert the chemical energy of hydrogen into electrical energy. Owing to their pollution-free operation, high efficiency, and zero emissions, these vehicles are progressively achieving commercialization domestically and internationally.

From both domestic and international experience, the safety issues of hydrogen energy have become a bottleneck affecting its large-scale utilization. Hydrogen is flammable and explosive, with a wide combustion range (4% ~ 75%), low ignition energy, large diffusion coefficient, and easy to embrittle the mechanical properties of materials, which has potential leakage and explosion hazards in the process of preparation, storage, transportation, filling, and use. Therefore, hydrogen safety is an important prerequisite for the application and large-scale commercialization of hydrogen energy. At the same time, economy is also a key factor in the large-scale utilization of hydrogen energy. If the safety index is unilaterally increased, the cost of hydrogen energy will be greatly increased, which will reduce the market advantage of hydrogen energy and is not conducive to the development of hydrogen energy industry. Therefore, it is necessary to understand the danger of hydrogen scientifically, formulate reasonable safety countermeasures for hydrogen energy industry, strengthen the research on related safety technologies and the construction of standard system, and then support the healthy development of China's hydrogen energy industry.

SUMMARY

The technical problem to be solved by the invention is to provide a method for constructing a risk monitoring and early warning tool of a fuel cell vehicle-mounted hydrogen system.

The technical scheme adopted by the invention for solving the technical problems is as follows: constructing a method for constructing a risk monitoring and early warning tool of a fuel cell vehicle-mounted hydrogen system, which includes the following steps:

Constructing a device database and a hydrogen leakage database for a fuel cell vehicle-mounted hydrogen system;

Processing the device database by using a minimum cutset algorithm to obtain a first risk evaluation result, and physically analyzing the hydrogen leakage database to obtain a second risk evaluation result;

Comprehensively processing the first risk evaluation result and the second risk evaluation result and displaying.

Further, in the method for constructing a risk monitoring and early warning tool of a fuel cell vehicle-mounted hydrogen system in the present invention, in the process of constructing the hydrogen leakage database, using a human-computer interaction interface to obtain variable parameters required for fuel combustion behavior, and obtaining characteristic data of open-source fluid thermodynamics and transport properties required for calculation from the CoolProp open-source library.

Further, in the method for constructing a risk monitoring and early warning tool of a fuel cell vehicle-mounted hydrogen system in the present invention, the device database includes a risk frequency database of leakage of the fuel cell vehicle-mounted hydrogen system and a device reliability database of a fuel cell vehicle mitigation system; the step of processing the device database by using a minimum cutset algorithm to obtain the first risk evaluation result includes: Using a fault tree to represent and calculate the probability of random leakage at a pipeline, joint, valve, and seal of the hydrogen storage bottle mouth of the fuel cell vehicle-mounted hydrogen system, as well as the random failure probability of a pressure reduction and isolation system.

Using the form of event tree to analyze the accident scenario chain of hydrogen leakage followed by the formation of a jet fire or delayed ignition and explosion, as well as the impact of safety protection system actions, and using the form of fault tree to systematically analyze each mitigation system of the fuel cell vehicle.

Performing quantitative analysis on the event tree and the fault tree based on Boolean algebra operations and Binary Decision Diagram algorithm to obtain a minimum cutset, and taking the minimum cutset as the first risk evaluation result.

Further, in the method for constructing a risk monitoring and early warning tool of a fuel cell vehicle-mounted hydrogen system in the present invention, the minimum cutset risk construction process includes the following steps:

Dividing the acquisition of cutset data according to the event tree, and using multi-threading to obtain cutset data through Kryo deserialization;

The way to screen the affected cutsets is to determine whether the basic events of cutsets include: running settings, unavailable settings, and basic events that have considered common causes;

If the basic events of the cutset include the basic events for running standby, the hydrogen combustion frequency of the cutset is set to 0, and the hydrogen combustion frequency is accumulated;

When calculation is not available, a hash table is obtained by an exhaustive method for each combination of several basic events;

The calculated affected cutsets absorb each other.

Further, in the method for constructing a risk monitoring and early warning tool of a fuel cell vehicle-mounted hydrogen system in the present invention, the step of physically analyzing the hydrogen leakage database to obtain a second risk evaluation result includes:

The ratio of the environmental absolute pressure $p_0$ to the critical pressure $p_c$ of hydrogen at the leakage port is:

$$\frac{p_0}{p_e} = (\frac{2}{k+1})^{\frac{k}{k-1}}$$

k is the hydrogen adiabatic index;

When $\frac{p_0}{p_1} > \beta$ , the hydrogen flow at the leakage port is subsonic flow, and the leakage intensity of the hydrogen is:

$$q_m = C_a A p_1 = \sqrt{\frac{kM}{ZRT_1} \cdot \frac{k}{k-1}(\frac{p_0}{p_1})^{\frac{2}{k}} \cdot [1 - (\frac{p_0}{p_1})^{\frac{k}{k-1}}]}$$

When $\frac{p_0}{p_1} < \beta$ , the hydrogen flow at the leakage port is sonic flow, and the leakage intensity of the hydrogen is:

$$q_m = C_a A p_1 = \sqrt{\frac{kM}{ZRT_1} \cdot \frac{2}{k+1}^{\frac{k+1}{k-1}}}$$

Wherein $\beta$ is the critical pressure ratio; $p_1$ is the pressure of hydrogen in a pipeline; $q_m$ is the leakage flow; $C_a$ is the hydrogen leakage coefficient; Z is the hydrogen compression factor; M is the molar mass of hydrogen; R is the gas constant.

Further, in the method for constructing a risk monitoring and early warning tool of a fuel cell vehicle-mounted hydrogen system in the present invention, the step of physically analyzing the hydrogen leakage database to obtain a second risk evaluation result includes:

Thermal radiation flux of point heat source formed by leakage crack:

$$q = \mu Q_0 H_c$$

Wherein q is the thermal radiation flux of point heat source; $\mu$ is the efficiency factor; $Q_0$ is the leakage rate, $H_c$ is the heat of combustion;

Calculation of thermal radiation intensity at a point;

$$I_i = \frac{qR_a}{4\pi / x^2}$$

Wherein $I_i$ is the thermal radiation intensity of point heat source i at target x, q is the thermal radiation flux of point heat source, and $R_a$ is the thermal radiation rate; x is the distance from the point heat source to the target point.

Further, in the method for constructing a risk monitoring and early warning tool of a fuel cell vehicle-mounted hydrogen system in the present invention, the step of physically analyzing the hydrogen leakage database to obtain a second risk evaluation result includes:

When hydrogen physically explodes, the blasting energy released by it is calculated by the following formula:

$$E_g = \frac{pV}{k-1}\left(1 - \left(\frac{0.103}{p}\right)^{\frac{k-1}{k}}\right) \times 10^3$$

Wherein: $E_g$ is the blasting energy of gas; p is the absolute pressure of gas; V is the volume of the container; k is the adiabatic index of gas.

Further, in the method for constructing a risk monitoring and early warning tool of a fuel cell vehicle-mounted hydrogen system in the present invention, the step of physically analyzing the hydrogen leakage database to obtain a second risk evaluation result includes:

Plume analysis: calculates the data related to the plume formed when different fuel forms are injected from the nozzle under different nozzle models;

Fuel cumulative behavior analysis: calculates the overpressure and cumulative behavior data generated by hydrogen spraying from different nozzle models, and outputs combustion chamber pressure chart, combustible mass chart, fuel stratification diagram, fuel trajectory diagram, and fuel mass flow rate chart;

Hydrogen flame temperature and trajectory behavior analysis: calculates the flame temperature and trajectory data generated by different nozzle models and different hydrogen fluid forms during jet combustion, and outputs the simulated flame cross-section diagram generated by fuel combustion;

Fuel flame heat flux analysis: calculates the behavior of jet flame after ignition for different fuel fluid forms under different nozzle models, including flame temperature, direction, and heat flux, and outputs thermal radiation data charts, heat flux distribution charts, and flame temperature cross-section diagrams at different positions from a three-dimensional perspective;

Over-pressure analysis: calculates different fuel fluid forms under different nozzle models, after fuel injection ignition, and then calculates the overpressure and pulse pressure behaviors at designated locations from the perspective of three-dimensional modeling, and outputs the overpressure and pulse pressure data charts of different dimensions after three-dimensional modeling.

Further, in the method for constructing a risk monitoring and early warning tool of a fuel cell vehicle-mounted hydrogen system in the present invention, the first risk evaluation result and the second risk evaluation result include: accident physical evaluation, flame temperature and trajectory icon, flame heat flux chart, flame plume calculation chart, probabilistic safety assessment, accident sequence scenario, and probabilistic risk insight.

Further, in the method for constructing a risk monitoring and early warning tool of a fuel cell vehicle-mounted hydrogen system in the present invention, the step of comprehensively processing the first risk evaluation result and the second risk evaluation result and displaying includes:

Comprehensively analyzing and visualizing the first risk evaluation result and the second risk evaluation result through a chart analysis library, and displaying the obtained chart file; and/or

Storing the chart file.

Implementing a method for constructing a risk monitoring and early warning tool of a fuel cell vehicle-mounted hydrogen system in the present invention has the following beneficial effects: the present invention can monitor and provide early warning of risks in vehicle-mounted hydrogen systems, provide guidance for safety management of hydrogen fuel cell vehicles, and promote the development and widespread application of hydrogen fuel cell technology.

BRIEF DESCRIPTION OF THE DRAWINGS

The invention will be further described with reference to the attached drawings and examples, in which:

FIG. 1 is a flowchart of a method for constructing a risk monitoring and early warning tool of a fuel cell vehicle-mounted hydrogen system provided by an embodiment of the present invention;

FIG. 2 is a flowchart of the research on the safety analysis model of a fuel cell vehicle-mounted system based on probability theory, provided by an embodiment of the present invention;

FIG. 3 is a flowchart of the minimum cutset risk calculation engine construction provided by the embodiment of the present invention.

DETAILED DESCRIPTION

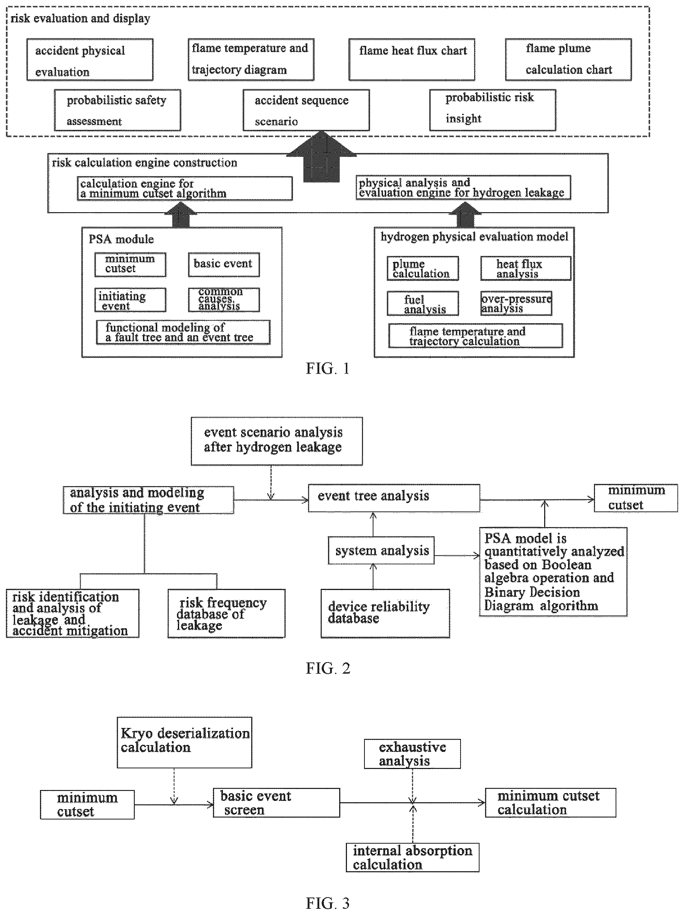

In order to have a clearer understanding of the technical features, purposes, and effects of the present invention, specific embodiments of the present invention will now be described in detail with reference to the attached drawings.
In this embodiment, based on the hydrogen energy numerical simulation model of the event tree and the fault tree, combined with the probability theory and the hydrogen leakage physical analysis model, a method for constructing a risk monitoring and early warning tool of a fuel cell vehicle-mounted hydrogen system is studied. The main steps include the following aspects:
The main technical method of this embodiment can be divided into five steps, as shown in FIG. 1.

1.1 Constructing a Safety Analysis Model of a Fuel Cell Vehicle-Mounted System Based on Probability Theory;

The research flowchart of the safety analysis model of the fuel cell vehicle-mounted system based on probability theory is shown in FIG. 2.

1.1.1 Constructing a Device Database of the Fuel Cell Vehicle-mounted Hydrogen System;

1) Risk identification and analysis of leakage and accident mitigation in the fuel cell vehicle-mounted hydrogen system;

2) Constructing a risk frequency database for leakage in the fuel cell vehicle-mounted hydrogen system;

3) Constructing a device reliability database of the mitigation system;

1.1.2 Analysis and Modeling of Initiating Events

For the random leakage events in the fuel cell vehicle-mounted hydrogen system, this embodiment uses the form of fault tree to represent and calculate the random leakage at pipelines, joints, valves, and seals of the hydrogen storage bottle mouths, as well as the failure of the pressure reducing valves, and the high-pressure gas directly enters the low-pressure pipelines to cause leakage. The occurrence frequency of each basic event is calculated by multiplying the number of pipelines, valves, and joints between pipelines by the unit value of each leakage size, and then modeled in the form of fault tree. For the random failure of the pressure reduction and isolation system, the failure probability of the pressure reduction and isolation system is calculated by fault tree, and the probability of overpressure rupture of the pipeline caused by high-pressure gas directly entering the low-pressure pipeline is calculated.

1.1.3 Event Scenario Analysis and PSA Analysis (probabilistic safety assessment) After Hydrogen Leakage.

Analyzing accident scenario chain of hydrogen leakage followed by the formation of a jet fire or delayed ignition and explosion, as well as the impact of safety protection system actions by using the form of event tree, and performing system analysis on each mitigation system, such as instrument control system, emergency cut-off system, pressure relief system and fire fighting system by using the form of fault tree. After the system analysis and event tree analysis are completed, the probabilistic safety analysis and modeling are carried out.

1.1.4 PSA Quantification and Minimum Cutset

The probabilistic safety analysis model is quantitatively analyzed based on Boolean algebra operations and Binary Decision (BDD) Diagram algorithm to obtain the minimum cutset.

1.2 Construction of Hydrogen Leakage Physical Analysis Model

The construction of the hydrogen leakage physical analysis model mainly includes the following technical contents:

1) Calculating the ignition probability of hydrogen based on the leakage flow;

The ignition probability after hydrogen leakage is related to the leakage flow. The common gas leakage flow calculation is derived from the Bernoulli equation, which is related to the flow state of gas leakage from the orifice. Therefore, to determine whether the gas flow is sonic critical flow or subsonic critical flow during leakage, the critical pressure ratio can be used to make the judgment:

$$\frac{p_0}{p_e} = (\frac{2}{k+1})^{\frac{k}{k-1}}$$

Where:

$p_0$: environmental absolute pressure, in units of Pa;

$p_e$: critical pressure of hydrogen at the leakage port, in units of Pa;

k: Hydrogen adiabatic index. The hydrogen adiabatic index k is a function of temperature, and for an ideal gas, it can be approximately regarded as a constant value. As an option, take 1.4 for diatomic gases, 1.29 for polyatomic gases, and 1.6 for monoatomic gases.

When $\frac{p_0}{p_1} > \beta$, the hydrogen flow at the leakage port is subsonic flow, and the leakage intensity of the hydrogen is:

$$q_m = C_aAp_1 = \sqrt{\frac{kM}{ZRT_1} \cdot \frac{k}{k-1}(\frac{p_0}{p_1})^{\frac{2}{k}} \cdot [1 - (\frac{p_0}{p_1})^{\frac{k}{k-1}}]}$$

When $\frac{p_0}{p_1} < \beta$, hydrogen flow at the leakage port is sonic flow, and the leakage intensity of the hydrogen is:

$$q_m = C_aAp_1 = \sqrt{\frac{kM}{ZRT_1} \cdot \frac{2}{k+1}^{\frac{k+1}{k-1}}}$$

Where:

$\beta$ : the critical pressure ratio;

$P_1$: the pressure of hydrogen in the pipeline, in units of Pa;

$q_m$: the leakage flow, in units of kg/s;

$C_a$: the hydrogen leakage coefficient, the gas leakage coefficient is related to the shape of the leakage port. It is 1 for circular ports, 0.95 for triangular ports, 0.90 for rectangular ports, 0.9-1.0 for tapered holes formed by internal corrosion, and 0.6-0.9 for tapered holes formed by external corrosion or external impact.

Z: the hydrogen compression factor, taken as I here;

M: the molar mass of hydrogen, in units of kg/mol;

R: the gas constant, taken as 8.314J/(mol·k);

2) Calculation of Thermal Radiation Flux and Thermal Radiation Intensity

Pressurized combustible mass forms jet when it leaks, and if it is ignited at the leakage crack, it forms jet fire. The calculation method of jet fire radiant heat includes the expansion of jet diffusion model including airflow effect, and the whole jet fire is regarded as composed of all point heat sources along the jet center line, and the thermal radiation flux of each point heat source is equal.

Thermal radiation flux of point heat source:

$$q = \mu Q_0 H_c$$

Where: q is the thermal radiation flux of point heat source; $\mu$ is the efficiency factor, taken as 0.35; $Q_0$ is the leakage rate, in units of kg/s; and $H_c$ is the heat of combustion, in units of J/kg.

Calculation of thermal radiation intensity at a point;

$$I_i = \frac{qR_a}{4\pi / x^2}$$

Where $I_i$ is the thermal radiation intensity of the point heat source i at the target x, in units of $W/m^2$, $q$ is the thermal radiation flux of the point heat source, and $R_a$ is the thermal radiation rate, taken as 0.2; x is the distance from the point heat source to the target point, in units of meters(m).

Through the calculation of the above formula, the range affected by the fire can be approximately obtained.

3) Calculation of explosion overpressure

When hydrogen physically explodes, the blasting energy released by it is calculated by the following formula:

$$E_g = \frac{pV}{k-1}(1 - (\frac{0.103}{p})^{\frac{k-1}{k}}) \times 10^3$$

Where: $E_g$ is the blasting energy of gas, in units of kJ; p is the absolute pressure of gas, in units of Mpa; V is the volume of the container, in units of $m^3$; $k$ is the adiabatic index of gas.

The explosive equivalent is converted into TNT equivalent, qTNT. The energy released by the explosion of 1 kg of TNT ranges from 4230 to 4836 kJ/kg, and the average explosion energy is generally taken as 4500 kJ/ kg. The damage degree caused by explosion in a certain range is quantitatively reflected by the above formula.

1.3 Minimum Cutset Risk Calculation Engine Construction

Based on the analysis and modeling of the initiating event in Section 1.1, the minimum cutset set of the fuel cell vehicle-mounted hydrogen system is obtained by analyzing the cutset algorithm with Risk Spectrum software. The minimum cutset algorithm is used to construct the calculation engine. The main considerations are shown in FIG. 3:

1) Dividing the acquisition of cutset data according to the event tree, and using multi-threading to obtain cutset data through Kryo deserialization;

2) The way to screen the affected cutsets is to determine whether the basic events of the cutsets include: running settings, unavailable settings, and basic events that have considered common causes;

3) Running standby calculation: if the basic events of the cutset include the basic events of running standby, the cutset HCF is set to 0, and the HCF is accumulated; where HCF is hydrogen combustion frequency, which is the frequency of hydrogen combustion.

4) When calculation is not available, a hash table is obtained by an exhaustive method for each combination of several basic events;

5) Internal absorption: the calculated affected cutsets absorb each other (combined hash table optimizes performance).

1.4 Physical Analysis and Evaluation After Hydrogen Leakage

In this embodiment, combustion simulation calculations and characteristic evaluations after hydrogen leakage are carried out from five dimensions:

1) Plume analysis: calculates the data related to the plume formed when different fuel forms are injected from the nozzle under different nozzle models.

2) Fuel cumulative behavior analysis: calculates the overpressure and cumulative behavior data generated by hydrogen spraying from different nozzle models, and outputs combustion chamber pressure chart, combustible mass chart, fuel stratification diagram, fuel trajectory diagram, and fuel mass flow rate chart.

3) Hydrogen flame temperature and trajectory behavior analysis: calculates the flame temperature and trajectory data generated by different nozzle models and different hydrogen fluid forms during jet combustion, and outputs the simulated flame cross-section diagram generated by fuel combustion.

4) Fuel flame heat flux analysis mainly calculates the behavior of jet flame after ignition for different fuel fluid forms under different nozzle models, including flame temperature, direction, and heat flux, and outputs thermal radiation data charts, heat flux distribution charts, and flame temperature cross-section diagrams at different positions from a three-dimensional perspective.

5) Over-pressure analysis, which mainly calculates different fuel fluid forms under different nozzle models, after fuel injection ignition, and then calculates the overpressure and pulse pressure behaviors at designated locations from the perspective of three-dimensional modeling, and outputs the overpressure (unlimited) and pulse pressure data charts of different dimensions after three-dimensional modeling.

1.5 Risk Assessment and Display

1) A calculation engine for combustion analysis of alternative hydrogen fuels, based on the Python language, is written to provide variable parameters required for fuel combustion behavior by a front-end user interface.

2) The characteristic data (temperature, density, mass, and other characteristic parameters needed for calculation) of open-source fluid thermodynamics and transport properties required for calculation are obtained through the Cool-Prop open-source library widely used in the industry.

3) After the calculation by the calculation engine, the calculation results are visualized through the chart analysis library, and the chart file is output. Additionally, the data is stored in persistent storage.

4) After the user inputs the parameters of a specific dimension to be calculated through the interactive interface, the calculation and analysis engine is called to output the characteristic data in the flame spraying or explosion scene, and to generate a graphic chart and a data two-dimensional table of the corresponding dimension.

5) The generation of visual graphics and charts is mainly completed by the calculation and analysis engine, relying on the powerful Matplotlib visual library based on the Python language. It can support the generation of a variety of complex commercial charts and meet the output needs of the graphic charts of the present disclosure.

Each embodiment in this specification is described in a progressive way, and each embodiment focuses on the differences from other embodiments, so it is only necessary to refer to the same and similar parts between each embodiment. As for the device disclosed in the embodiment, because it corresponds to the method disclosed in the embodiment, the description is relatively simple, and the relevant points can be found in the method part.

Professionals can further realize that the units and algorithm steps of each example described in connection with the embodiments disclosed herein can be realized by electronic hardware, computer software, or a combination of the two. To clearly illustrate the interchangeability of hardware and software, the components and steps of each example have been generally described according to functions in the above description. Whether these functions are implemented in hardware or software depends on the specific application and design constraints of the technical scheme. Skilled person can use different methods to realize the described functions for each particular application, but this implementation should not be considered beyond the scope of the present invention.

The steps of the methods or algorithms described in connection with the embodiments disclosed herein may be directly implemented in hardware, a software module executed by a processor, or a combination of the two. The software module can be placed in random access memory (RAM), internal memory, read-only memory (ROM), electrically programmable ROM, electrically erasable programmable ROM, register, hard disk, removable disk, CD-ROM, or any other storage medium known in the technical field.

The above embodiment is only for explaining the technical concept and characteristics of the present invention, and its purpose is to enable people familiar with this technology to understand the content of the present invention and implement it accordingly, without limiting the protection scope of the present invention. All equivalent changes and modifications made within the scope of the claims of the present invention should belong to the scope of the claims of the present invention.

## Claims

1. A method for constructing a risk monitoring and early warning tool of a fuel cell vehicle-mounted hydrogen system, comprising the following steps:

   constructing a device database and a hydrogen leakage database for a fuel cell vehicle-mounted hydrogen system;
   processing the device database by using a minimum cutset algorithm to obtain a first risk evaluation result, and physically analyzing the hydrogen leakage database to obtain a second risk evaluation result;
   comprehensively processing the first risk evaluation result and the second risk evaluation result and displaying.

2. The method for constructing a risk monitoring and early warning tool of a fuel cell vehicle-mounted hydrogen system according to claim 1, wherein in the process of constructing the hydrogen leakage database, using a human-computer interaction interface to obtain variable parameters required for fuel combustion behavior, and obtaining characteristic data of open-source fluid thermodynamics and transport properties required for calculation from the CoolProp open-source library.

3. The method for constructing a risk monitoring and early warning tool of a fuel cell vehicle-mounted hydrogen system according to claim 1, wherein the device database comprises a risk frequency database of leakage of the fuel cell vehicle-mounted hydrogen system and a device reliability database of a fuel cell vehicle mitigation system; the processing the device database by using a minimum cutset algorithm to obtain the first risk evaluation result comprises:

   using a fault tree to represent and calculate the probability of random leakage at a pipeline, joint, valve, and seal of the hydrogen storage bottle mouth of the fuel cell vehicle-mounted hydrogen system, as well as the random failure probability of a pressure reduction and isolation system;
   using the form of event tree to analyze the accident scenario chain of hydrogen leakage followed by the formation of a jet fire or delayed ignition and explosion, as well as the impact of safety protection system actions, and using the form of fault tree to systematically analyze each mitigation system of the fuel cell vehicle;
   performing quantitative analysis on the event tree and the fault tree based on Boolean algebra operations and Binary Decision Diagram algorithm to obtain a minimum cutset, and taking the minimum cutset as the first risk evaluation result.

4. The method for constructing a risk monitoring and early warning tool of a fuel cell vehicle-mounted hydrogen system according to claim 1, wherein the minimum cutset risk construction process comprises the following steps:

dividing the acquisition of cutset data according to a event tree, and using multi-threading to obtain cutset data through Kryo deserialization;

the way to screen the affected cutsets is to determine whether the basic events of cutsets comprise: running settings, unavailable settings, and basic events that have considered common causes;

if the basic events of the cutset comprise the basic events for running standby, the hydrogen combustion frequency of the cutset is set to 0, and the hydrogen combustion frequency is accumulated;

when calculation is not available, a hash table is obtained by an exhaustive method for each combination of several basic events;

the calculated affected cutsets absorb each other.

5. The method for constructing a risk monitoring and early warning tool of a fuel cell vehicle-mounted hydrogen system according to claim 1, wherein the physically analyzing the hydrogen leakage database to obtain a second risk evaluation result comprises:

the ratio of the environmental absolute pressure $p_0$ to the critical pressure $p_c$ of hydrogen at the leakage port is:

$$\frac{p_0}{p_e} = (\frac{2}{k+1})^{\frac{k}{k-1}}$$

$k$ is the hydrogen adiabatic index;

when $\frac{p_0}{p_e} > \beta$ , the hydrogen at the leakage port is subsonic flow, and the leakage intensity of the hydrogen is:

$$q_m = C_aAp_1 = \sqrt{\frac{kM}{ZRT_1} \cdot \frac{k}{k-1}(\frac{p_0}{p_1})^{\frac{2}{k}} \cdot [1 - (\frac{p_0}{p_1})^{\frac{k}{k-1}}]}$$

when $\frac{p_0}{p_e} < \beta$ , the hydrogen at the leakage port is sonic flow, and the leakage intensity of the hydrogen is:

$$q_m = C_aAp_1 = \sqrt{\frac{kM}{ZRT_1} \cdot \frac{2}{k+1}^{\frac{k+1}{k-1}}}$$

wherein $\beta$ is the critical pressure ratio; $p_1$ is the pressure of hydrogen in a pipeline; $q_m$ is the leakage flow; $C_a$ is the hydrogen leakage coefficient; Z is the hydrogen compression factor; M is the molar mass of the hydrogen; R is the gas constant.

6. The method for constructing a risk monitoring and early warning tool of a fuel cell vehicle-mounted hydrogen system according to claim 1, wherein the physically analyzing the hydrogen leakage database to obtain a second risk evaluation result comprises:

thermal radiation flux of point heat source formed by leakage crack:

$$q = \mu Q_0H_c$$

wherein q is the thermal radiation flux of point heat source; $\mu$ is the efficiency factor; $Q_0$ is the leakage rate, $H_c$ is the heat of combustion;
calculation of thermal radiation intensity at a point;

$$I_i = \frac{qR_a}{4\pi/x^2}$$

wherein $I_i$ is the thermal radiation intensity of point heat source i at target x, q is the thermal radiation flux of point heat source, and $R_a$ is the thermal radiation rate; x is the distance from the point heat source to the target point.

7. The method for constructing a risk monitoring and early warning tool of a fuel cell vehicle-mounted hydrogen system according to claim 1, wherein the physically analyzing the hydrogen leakage database to obtain a second risk evaluation result comprises:

when hydrogen physically explodes, the blasting energy released by it is calculated by the following formula:

$$E_g = \frac{pV}{k-1}\left(1 - \left(\frac{0.103}{p}\right)^{\frac{k-1}{k}}\right) \times 10^3$$

where: $E_g$ is the blasting energy of gas; p is the absolute pressure of gas; V is the volume of the container; k is the adiabatic index of gas.

8. The method for constructing a risk monitoring and early warning tool of a fuel cell vehicle-mounted hydrogen system according to claim 1, wherein the physically analyzing the hydrogen leakage database to obtain a second risk evaluation result comprises:

plume analysis: calculates the data related to the plume formed when different fuel forms are injected from the nozzle under different nozzle models;
fuel cumulative behavior analysis: calculates the overpressure and cumulative behavior data generated by hydrogen spraying from different nozzle models, and outputs combustion chamber pressure chart, combustible mass chart, fuel stratification diagram, fuel trajectory diagram, and fuel mass flow rate chart;
hydrogen flame temperature and trajectory behavior analysis: calculates the flame temperature and trajectory data generated by different nozzle models and different hydrogen fluid forms during jet combustion, and outputs the simulated flame cross-section diagram generated by fuel combustion;
fuel flame heat flux analysis: calculates the behavior of jet flame after ignition for different fuel fluid forms under different nozzle models, comprising flame temperature, direction, and heat flux, and outputs thermal radiation data charts, heat flux distribution charts, and flame temperature cross-section diagrams at different positions from a three-dimensional perspective;
over-pressure analysis: calculates different fuel fluid forms under different nozzle models, after fuel injection ignition, and then calculates the overpressure and pulse pressure behaviors at designated locations from the perspective of three-dimensional modeling, and outputs the overpressure and pulse pressure data charts of different dimensions after three-dimensional modeling.

9. The method for constructing a risk monitoring and early warning tool of a fuel cell vehicle-mounted hydrogen system according to claim 1, wherein the first risk evaluation result and the second risk evaluation result comprise: accident physical evaluation, flame temperature and trajectory icon, flame heat flux chart, flame plume calculation chart, probabilistic safety assessment, accident sequence scenario, and probabilistic risk insight.

10. The method for constructing a risk monitoring and early warning tool of a fuel cell vehicle-mounted hydrogen system according to claim 1, wherein the comprehensively processing the first risk evaluation result and the second risk evaluation result and displaying comprises:

comprehensively analyzing and visualizing the first risk evaluation result and the second risk evaluation result through a chart analysis library, and displaying the obtained chart file;
and/or
storing the chart file.

risk evaluation and display

| accident physical evaluation | flame temperature and trajectory diagram | flame heat flux chart | flame plume calculation chart |

| probabilistic safety assessment | accident sequence scenario | probabilistic risk insight |

risk calculation engine construction

| calculation engine for a minimum cutset algorithm | physical analysis and evaluation engine for hydrogen leakage |

PSA module

| minimum cutset | basic event |
| initiating event | common causes analysis |
| functional modeling of a fault tree and an event tree | |

hydrogen physical evaluation model

| plume calculation | heat flux analysis |
| fuel analysis | over-pressure analysis |
| flame temperature and trajectory calculation | |

FIG. 1

event scenario analysis after hydrogen leakage

analysis and modeling of the initiating event

event tree analysis

minimum cutset

| risk identification and analysis of leakage and accident mitigation | risk frequency database of leakage |

system analysis

device reliability database

PSA model is quantitatively analyzed based on Boolean algebra operation and Binary Decision Diagram algorithm

FIG. 2

Kryo deserialization calculation

exhaustive analysis

minimum cutset

basic event screen

minimum cutset calculation

internal absorption calculation

FIG. 3

## INTERNATIONAL SEARCH REPORT

| International application No. |
|---|
| **PCT/CN2023/094876** |

**A. CLASSIFICATION OF SUBJECT MATTER**

H01M8/04298(2016.01)i; G06Q10/06(2023.01)i

According to International Patent Classification (IPC) or to both national classification and IPC

**B. FIELDS SEARCHED**

Minimum documentation searched (classification system followed by classification symbols)

H01M8/-: G06Q10/-

Documentation searched other than minimum documentation to the extent that such documents are included in the fields searched

Electronic data base consulted during the international search (name of data base and, where practicable, search terms used)

CNKI, ENTXT, CNKI: 泄露 or 泄漏, 风险, 评估 or 评价, 爆破能量, 音速, 热辐射通量, 最小割集, 事件树, 故障树, 哈希, leakage, fault tree, pipe+, evaluat+

**C. DOCUMENTS CONSIDERED TO BE RELEVANT**

| Category* | Citation of document, with indication, where appropriate, of the relevant passages | Relevant to claim No. |
|---|---|---|
| Y | CN 113743750 A (SUZHOU NUCLEAR POWER RESEARCH INSTITUTE et al.) 03 December 2021 (2021-12-03) description, paragraphs 0058-0125, and figures 1-3 | 1-10 |
| Y | CN 114117732 A (BEIJING GAS GROUP CO., LTD.) 01 March 2022 (2022-03-01) description, paragraphs 0027-0114, and figures 1-9 | 1-10 |
| Y | CN 107944675 A (PETRO-CYBERWORKS INFORMATION TECHNOLOGY CO., LTD.) 20 April 2018 (2018-04-20) description, paragraphs 0066-0140 | 6-7 |
| A | CN 109830709 A (TSINGHUA UNIVERSITY) 31 May 2019 (2019-05-31) entire document | 1-10 |
| A | CN 112349931 A (WUHAN GROVE HYDROGEN AUTOMOBILE CO., LTD.) 09 February 2021 (2021-02-09) entire document | 1-10 |
| A | CN 113449955 A (NORTH CHINA MUNICIPAL ENGINEERING DESIGN & RESEARCH INSTITUTE CO., LTD.) 28 September 2021 (2021-09-28) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 June 2023** | **29 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/094876** |

**C.    DOCUMENTS CONSIDERED TO BE RELEVANT**

| Category* | Citation of document, with indication, where appropriate, of the relevant passages | Relevant to claim No. |
|---|---|---|
| A | JP 2005327214 A (MITSUI SUMITOMO INSURANCE CO., LTD. et al.) 24 November 2005 (2005-11-24)<br>        entire document | 1-10 |

Form PCT/ISA/210 (second sheet) (July 2022)

**INTERNATIONAL SEARCH REPORT**
Information on patent family members

International application No.

**PCT/CN2023/094876**

| Patent document cited in search report | | | Publication date (day/month/year) | Patent family member(s) | | | Publication date (day/month/year) |
|---|---|---|---|---|---|---|---|
| CN | 113743750 | A | 03 December 2021 | None | | | |
| CN | 114117732 | A | 01 March 2022 | None | | | |
| CN | 107944675 | A | 20 April 2018 | None | | | |
| CN | 109830709 | A | 31 May 2019 | CN | 109830709 | B | 14 January 2020 |
| CN | 112349931 | A | 09 February 2021 | CN | 214043728 | U | 24 August 2021 |
| CN | 113449955 | A | 28 September 2021 | None | | | |
| JP | 2005327214 | A | 24 November 2005 | None | | | |

Form PCT/ISA/210 (patent family annex) (July 2022)